# EUROPEAN PATENT APPLICATION

(11) **EP 2 468 164 A1**
(43) Date of publication of application: **27.06.2012**
(21) Application number: 11183435.4
(22) Date of filing: 30.09.2011
(51) Int. Cl.: A47L 9/18

(54) **Method and dynamic separator unit for a liquid-bath vacuum cleaner**

(30) Priority: 27.12.2010 IT MI20102402
(71) Applicant: GISOWATT S.P.A. Industria Elettrodomestici, 21055 Gorla Minore (Varese) (IT)
(72) Inventor: Sozzi, Gianfranco, 21055 Gorla Minore (IT)
(74) Representative: Coloberti, Luigi

(57) **Abstract**

A method and a dynamic separator unit (25, 26) for separating water drops (D1) entrained by an airflow in a liquid-bath vacuum cleaner (10), and vacuum cleaner (10) comprising this separator unit (25, 26). The dynamic separator unit (25, 26) comprises a first brush-type separator (25) mounted to rotate about an axis (27), provided with a plurality of bristles (32) radially extending from a central core (30), and a second dynamic separator (26) of fan type, rearly positioned and operatively connected to the first brush type separator (25); the second dynamic separator (26) is configured to generate a swirling and turbulent airflow suitable to push the water drops (D1) entrained by the sucked air flow, that may have flown through the bristles (32) of the first separator (25) towards the first separator (25), radially against a baffle (33).

## Description

### BACKGROUND OF THE INVENTION

The present invention relates to a liquid-bath vacuum cleaner provided with a dynamic separator, in order to separate dust particles and/or water drops which are entrained by the sucked airflow, after they have flown through a liquid bath at the bottom of a container or tank; particularly, the invention is directed to improving dynamic separators for vacuum cleaners of the above-mentioned type to the operative method and to a vacuum cleaner comprising the dynamic separator according to the invention.

### PRIOR ART

A vacuum cleaner of liquid-bath type, normally comprises a container or tank for a liquid bath, generally water, and a suction unit supported by a removable closing cover, wherein the suction unit comprises a fan driven by an electric motor and a filter either made of fabric, or any other suitable material, in order to retain the water drops entrained by the sucked airflow which containing any dust particles that have not been retained by the liquid bath.

Conventional filters, in addition to be wetted by water, tend to be progressively clogged by dust particles, thereby impairing the operation and the efficacy of the vacuum cleaner.

In order to overcome this drawback, as an alternative to conventional filters, the use of dynamic separators has been proposed, which substantially consist of a hollow body of cylindrical or conical shape, provided with a plurality of radial tabs, wherein the dynamic separator is operatively connected to the drive shaft of a suction rotor. The use of dynamic separators of the above-mentioned type, is described for example in EP-A-1475028 and EP-A-1 219 223 of the same Applicant, and in EP-A-0890335; a brush-type separator is known from GB-A-2 382 042 which is the closest prior art to claims 1 and 2.

In the liquid-bath vacuum cleaner with dynamic separator, in addition to the water filter, a centrifugal filtratering action is used by a dynamic separator under rapid rotation; particularly, in the sucked air mass that has flown through the liquid bath, a swirling motion is generated by the rotary separator, the centrifuge force thereof projecting the dust particles and the water drops radially against a peripheral wall of the container for the water bath, and/or a vacuum chamber.

While on the one hand the use of dynamic separators of the above-mentioned type has given satisfactory results, on the other hand it also entails several drawbacks, both constructive and functional, in addition to being comparatively expensive.

As these separators are obtained by injection moulding of plastic material, the most important drawback is the difficulty of achieving a proper dynamic balance of the separator under rapid rotation.

Therefore, after being moulded, the separator requires to be suitably balanced, with resulting production waste. In fact, a separator that has not been properly balanced causes the early failure of the suction fan drive motor.

In order to overcome these drawbacks, GB-A-2382042 and FR-A-2899086 propose the use of a new type of dynamic separator, which substantially consists of a rotating brush, comprising a central core from which a plurality of radial fiber extends. The liquid drops entrained by the sucked air flow impact against the rotating brush, which projects them radially under the effect of the strong centrifuge action.

In the practical implementation of this brush type separator, in liquid-bath vacuum cleaner, a further problem has occurred; it has been observed, in fact, that some water drops entrained by the strong airflow, flow through the fibers of the rotating brush, and are progressively collected in dead areas of the airflow path, until they flow out the vacuum cleaner.

While a dynamic separator of brush type, relative to one of conventional type, does not entail any dynamic balance problems, it has not proven to be completely unsuitable for an application in a liquid-bath vacuum cleaner in the practice.

The problem to be solved by the present invention regards as how to minimize liquid collecting dead zones in the airflow path of a liquid-bath vacuum cleaner.

### OBJECTS OF THE INVENTION

Accordingly, there is a requirement to further improve this type of separator. A first object of the present invention is thus to provide a method for separating the water drops from an airflow in a liquid-bath vacuum cleaner, by means of a dynamic separator of brush type which provides for improvement.

A second object of the present invention is to provide a dynamic separator unit for a liquid-bath vacuum cleaner, which substantially decreases, if not completely eliminates, the passage of liquid drops through the same separator unit, thereby preventing the water from collecting in dead areas in the path of the airflow outgoing from the vacuum cleaner.

A further object of the invention is to provide a dynamic separator unit, of brush type, which is of simple construction and easy to be balanced, in view of the minimized mass under rotation.

A still further object is to provide a liquid-bath vacuum cleaner, which is suitably configured and provided with a dynamic separator unit of brush type comprising the improvements according to the invention.

### BRIEF DESCRIPTION OF THE INVENTION

According to a first aspect of the invention, a method for separating water drops from an airflow sucked in a liquid-bath vacuum cleaner has been provided, comprising a first dynamic separator of brush type connected to a driving shaft of a suction rotor, characterized by:
- arranging a second dynamic fan-type separator, between the first dynamic separator and the suction rotor, the second dynamic separator being operatively connected to the first separator; and
- generating, by means of the second dynamic separator, a swirling motion and a turbulent status in the sucked airflow tending to push the entrained water drops in the direction of the first dynamic separator, and radially towards a peripheral baffle.

According to another aspect of the invention, a dynamic separator unit has been provided, suitable to separate water drops from a sucked airflow in a liquid-bath vacuum cleaner, according to the above-mentioned method, wherein the separator unit comprises a first brush type separator mounted to rotate about an axis, the brush type separator comprising a central core and a plurality of radially extending fibers, characterized by comprising a second water-drop separator, downstream and operatively connected to the first separator;
the second drop separator comprising a fan configured and oriented to generate a swirling and turbulent motion in the sucked airflow to push the water drops in the direction of the first separator, and radially towards a surrounding baffle.

According to still another aspect of the invention, a liquid-bath vacuum cleaner has been provided which comprises a dynamic separator unit of the type referred to.

### BRIEF DESCRIPTION OF THE DRAWINGS

These and other characteristics of the invention will be better understood from the following description with reference to an example of the annexed drawings, in which:
Fig. 1 is a sectional view of a liquid-bath vacuum cleaner, comprising a dynamic separator unit according to the invention;
Fig. 2 is an enlarged detail of the dynamic separator unit;
Fig. 3 is a perspective view of the second dynamic separator;
Fig. 4 is a view similar to Fig. 2, to show the operation of the separating unit, in accordance with the method of the present invention.

### DETAILED DESCRIPTION OF THE INVENTION

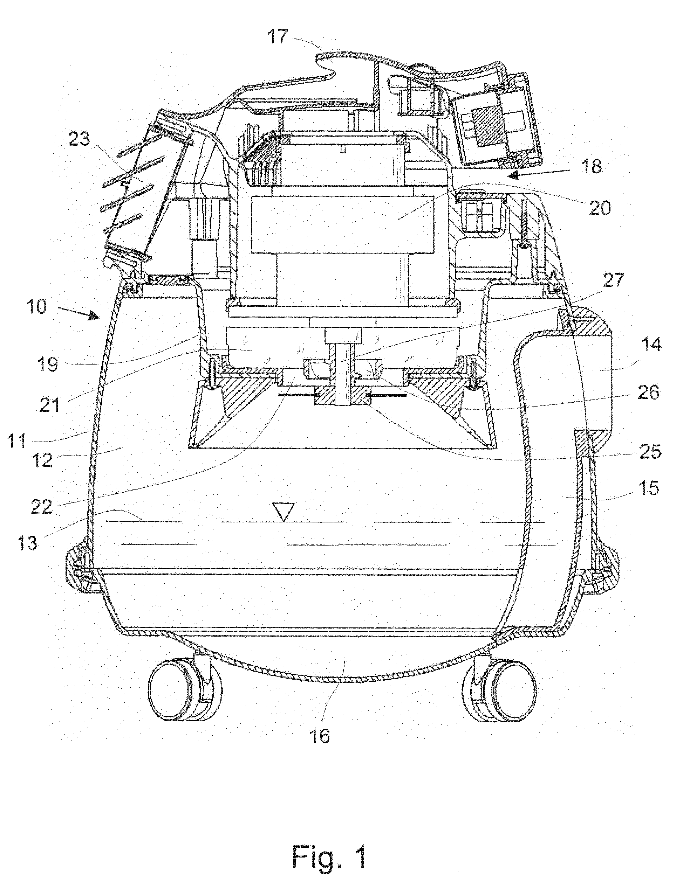

Fig. 1 schematically shows a cross-sectional view of a liquid-bath vacuum cleaner, generally designated with 10, wherein the vacuum cleaner 10 comprises a container or tank 11 defining a vacuum chamber 12, and configured such as to contain a liquid bath 13, for example water, on the bottom thereof.

On the one side thereof, the container or tank 11 has an air inlet opening 14 to which a hose can be connected, which ends with a suction inlet for the air and dust from the outside; a duct 15 extends within the vacuum chamber 12 from the air inlet opening 14 to the bottom 16 of the container or tank 11, below the water level 13.

In Fig. 1, reference number 17 has been used to designate a cover or upper closing part or the container or tank 11, wherein a suction unit 18 is housed to generate an air vacuum degree in the chamber 12 of the container or tank 11. The suction unit 18 is housed between the cover 17 and a bottom wall 19; the suction unit 18 comprises, in turn, an electric motor 20, a suction rotor 21 being connected to the motor shaft and being in communication with the vacuum chamber 12 through a central hole 22 for the passage of the sucked airflow, in turn ejected to the outside from an outlet opening 23 of the closing cover 17.

Co-axially to the central hole 22 for the passage of the sucked airflow, the suction unit 18 comprises a water separator device consisting of a first dynamic separator 25 of brush type, and a second dynamic separator 26 of fan type, which are operatively connected to each other and assembled to rotate with the output shaft 27 of the motor 20.

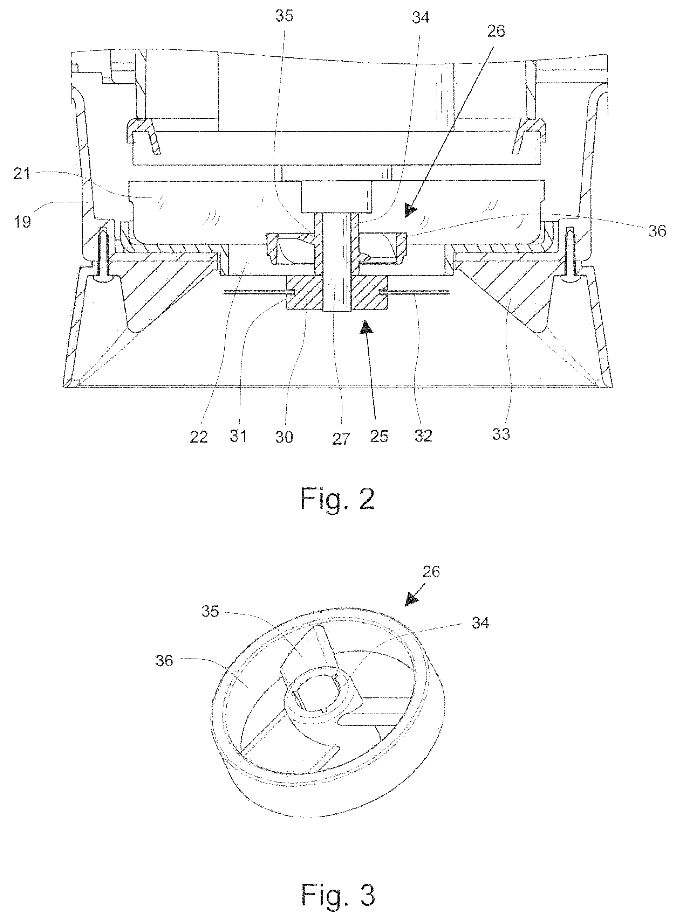

The Fig. 2 shows the water separator device according to the invention in greater detail; in Fig. 2 the same reference numbers have been used as in Fig. 1 to designate similar or equivalent parts.

As stated above, and as shown in the enlarged detail in Fig. 2, the water separator device comprises a first dynamic separator 25 in the form of a rotating brush on a side facing the liquid bath 13 of the vacuum cleaner, and a second dynamic separator of fan type 26, on the side opposite the preceding one, which are operatively connected to each other by the shaft 27 of the motor 20.

Particularly, the first brush type separator 25 comprises a central core 30 and a plurality of fibers 32 extending from the peripheral edge 31 of the core 30, which are radially oriented to a peripheral wall of a baffle 33 having a cone shape opening downwards.

The brush type separator 25 can be however manufactured, for example, by moulding the central core 30 from a suitable plastic material, embedding the rear end of the fibers 32 in the plastic material of the central core 30 upon moulding; however, any other way of providing the first brush type separator 25 is not excluded within the scope of the present invention.

The fibers 32 of the first dynamic separator 25 can be made from any synthetic material; in addition, they have sufficient diameter and rigidity to hold the fibers on a plane substantially orthogonal to the rotational axis 27; the fibers 32 can be further arranged in either one or more overlapped layers and in such a number as to allow the sucked airflow to pass therethrough, while preventing, on the other hand, dust particles and water drops to pass therethrough, which would tend to be entrained by the airflow due to the strong suction.

The separator device further comprises a second dynamic separator of fan type 26, a preferred embodiment thereof being shown in the perspective view of Fig. 3; as shown in this figure, and in the sectional view in Fig. 2, the separator of fan type 26 comprises a central hub 34 which is mechanically connected to the driving shaft 27, and a plurality of radial blades 35 which are angularly separated and extending between the central hub 34 and an outer ring 36, in the form of a large annular band.

The radial blades 35 are configured and oriented, or are slanted relative to the rotational axis of the separator, such as to generate in the sucked airflow, a swirling and turbulent motion tending to push and project those water drops that may have passed through the fibers 32 of the first dynamic separator 25, in the direction of the same brush type separator 25 and radially towards the conic wall 11 of the baffle 33.

In the example in Fig. 3, a dynamic separator 26 has been shown as being moulded in one single piece from a thermoplastic material, comprising three blades 35 extending from the central hub 34 to the outer ring 36; however, it is not excluded that the second separator 26 can be of any other type.

With further reference to Fig. 2, the water separator device comprises two separately moulded dynamic separators; however, it is not excluded that the two dynamic separators can be moulded as one single piece from plastic material, or another suitable material.

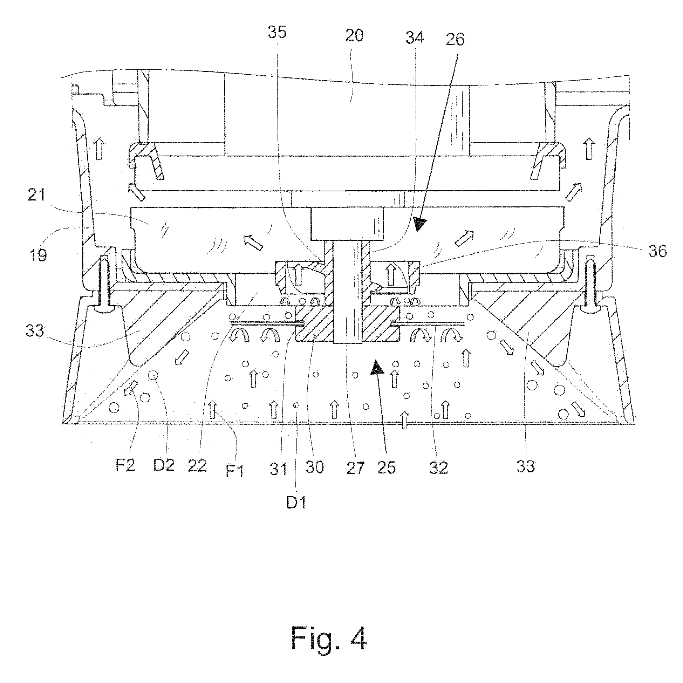

The innovative and operative aspects of the water separator device according to the present invention will be more clearly understood from Fig. 4, which corresponds to Fig. 2, wherein the path of the water drops entrained by the sucked airflow, as well as the combined action of the two dynamic separators 25 and 26 has been shown; in Fig. 4, the same reference numbers have been used to designated similar or equivalent parts as in Fig. 2.

As may be seen in Fig. 4, the water drops D1 from the liquid bath 13, Fig. 1, are entrained by the sucked airflow, upwards in the direction of the arrows F1, towards the first brush type separator 25, at which a strong swirling motion is formed, which causes a radial flowing of the water drops D1, towards and against the conical surface of the baffle 33.

When the water drops D1 come in contact with the surface of the baffle 33, they tend to grow bigger, such that they downwardly flow along the slanted surface of the baffle 33 due to their weight, in the direction of the arrows F2, until they fall into the liquid bath underneath.

During experimental tests, it has been noticed that, however, a part of the drops D1 tends to be entrained by the sucked airflow, and to pass through the bristles 32 of the brush type separator 25, then moving further to the fan 21.

According to the present invention, the dragging of the water drops is effectively counteracted by the dynamic action of the second separator 26 which hinders the passage. Particularly, the shape and orientation of the blades 35 of the dynamic separator 26 should be such as to generate in the airflow between the two separators 25 and 26, a strong swirling and turbulent motion which tends to project the water drops in the direction of the first separator 25, and radially towards the conical surface of the baffle 33, from which they fall again into the bath underneath.

From what has been stated above and illustrated in the annexed drawings, it shall be understood that a dynamic water separator device has been provided, characterized by a differentiated action for separating the water drops entrained by the sucked airflow: particularly, a first action for separating the water drops from the airflow incoming from the liquid bath underneath, under the effect of the strong centrifugal action generated by the main separator 25, and a second centrifugal action pushing those water drops that have passed through the bristles 32 of the separator 25, by the second dynamic separator 26.

The use of a dynamic separator of brush type and of a second separator of fan type, both having comparatively small diameters, has allowed both to solve the problem of the complete separation of the water drops from the airflow outgoing from the vacuum cleaner, and to substantially reduce, if not completely eliminate, the dynamic balance problems, due to the reduced weight and size of the rapidly rotating masses.

It should be understood, however, that what has been stated and illustrated above with reference to the annexed drawing has been given by way of example of the general characteristics of the separator device and operation thereof.

Therefore, other modification and/or variations may be carried out to one or both dynamic separators, or parts thereof, without however departing from the claims.

## Claims

1. A method for separating water drops from an airflow sucked into a liquid-bath vacuum cleaner (10), in which the vacuum cleaner (10) comprises a first dynamic separator (25) of brush type connected to a driving shaft (27) of a suction rotor (21), **characterised by**:
providing a second dynamic separator (26) of fan type between the first dynamic separator (25) and the suction rotor (21); and
generating, by the second separator (26), a swirling and turbulent motion in the sucked airflow, tending to push the entrained water drops in the direction of the first dynamic separator (25) and radially towards a peripheral baffle (33).

2. A dynamic water separator device for a liquid-bath vacuum cleaner (10),suitable for performing the method of claim 1, in which the separator device comprises a first dynamic separator (25) of brush type, mounted to rotate around an axis (27), **characterised by** comprising a second dynamic separator (26) of fan type, operatively connected to the first dynamic separator (25), the second dynamic separator (26) being conformed and positioned to generate a swirling and turbulent motion in the airflow, tending to push the entrained water drops in the direction of the first dynamic separator and radially towards a surrounding peripheral baffle (33).

3. The dynamic separator device according to claim 2, **characterised in that** the second dynamic separator (26) comprises a central hub (34) and a plurality of radial blades (35) extending from the central hub (34) towards an external ring (36), said blades (35) being conformed and angularly positioned to generate a swirling and turbulent motion in the airflow tending to push the water drops radially towards the baffle (33).

4. The separator device according to claim 2 or 3, **characterised in that** the baffle (33) has a conical contact surface for the water drops.

5. A vacuum cleaner (10) of liquid-bath type, comprising:
a container (11) for a liquid-bath crossed by a sucked airflow;
an upper cover (17) for the closure of the container (11),
and an air suction unit (18);
**characterised by** including a dynamic separator device for the water drops according to any one of claims 2 to 4.
